# EUROPÄISCHE PATENTANMELDUNG

(11) **EP 4 800 853 A1**
(43) Veröffentlichungstag der Anmeldung: **02.09.2026**
(21) Anmeldenummer: 25000054.4
(22) Anmeldetag: 19.05.2025
(51) Int. Cl.: H01R 13/58, B29C 45/00, H01R 31/06, H04Q 1/00

(54) **KOMPLETTKABEL UND VERFAHREN ZUR HERSTELLUNG EINES KOMPLETTKABELS**

(30) Priorität: 26.02.2025 DE 102025107265
(71) Anmelder: Laniol GmbH, 67122 Altrip (DE)
(72) Erfinder: Veselcic, Marko, D-67122 Altrip (DE)
(74) Vertreter: Eickmeyer, Dietmar

(57) **Zusammenfassung**

Die Erfindung betrifft ein Komplettkabel (10, 38, 42) mit einem Leiterstück (12) vorgegebener Länge, wobei das wenigstens eine Leiterstück (12) an jedem seiner beiden Enden mit einem Verbindungselement (14, 16) eines bestimmten Verbindungstyps verbunden ist, wobei das Leiterstück (12) eine durch eine durch den Verbindungstyp der Verbindungselemente (14, 16) vorgegebene Anzahl von Leiterstücken aufweist, durch die eine entsprechende Anzahl von elektrischen Verbindungen zwischen den beiden Verbindungselementen (14, 16) hergestellt ist, wobei die Verbindungselemente (14, 16) ein Gehäuse (18) aus elektrischem Isoliermaterial aufweisen, und wobei das Gehäuse (18) eine Ausnehmung (48) aufweist, die für eine Aufnahme eines Zugentlastungselements vorgesehen ist. Zudem ist das Zugentlastungselement als Vergusselement (36) ausgestaltet. Außerdem ist das Vergusselement (36) an jedem Verbindungselement (14, 16) sowie ein Kabelmantel (34) um die Leiterstücke einstückig aus einem Gussmaterial (46) hergestellt, welches elektrisch nichtleitend ist.

Die Erfindung betrifft auch ein Verfahren zur Herstellung des Komplettkabels (10, 38, 42), bei dem wenigstens der Kabelmantel (34) um die Leiterstücke sowie der Vergusselemente (36) in den Ausnehmungen (48) der Gehäuse (18) mit einem elektrisch nichtleitendem Gussmaterial (46) in einem Gussverfahrensvorgang hergestellt wird.

## Beschreibung

Die Erfindung betrifft ein Komplettkabel mit einem Kabelstück vorgegebener Länge, wobei das Kabelstück an jedem seiner beiden Enden mit einem Verbindungselement eines bestimmten Verbindungstyps verbunden ist, wobei das Kabelstück eine durch den Verbindungstyp der Verbindungselemente vorgegebene Anzahl von Leiterstücken aufweist, durch die eine entsprechende Anzahl von elektrischen Verbindungen zwischen den beiden Verbindungselementen hergestellt ist, wobei die Verbindungselemente ein Gehäuse aus elektrischem Isoliermaterial aufweisen, wobei das Gehäuse eine Ausnehmung aufweist, die für eine Aufnahme eines Zugentlastungselements vorgesehen ist. Die Erfindung betrifft auch ein Verfahren zur Herstellung des Komplettkabels.

Es ist ein allgemein bekannt, dass für elektrische Geräte, die miteinander Daten oder Informationen austauschen sollen, - wie zum Beispiel Feldgeräte, Reihengeräte, Hutschienen oder Lastschaltleisten - zu diesem Zweck mit einem Datenkabel verbunden werden. Ein solches Datenkabel weist üblicherweise an jedem seiner Enden jeweils einen vorkonfektionierten Stecker oder eine Buchse auf und sollen als Komplettkabel bezeichnet werden. Solche Stecker/Buchsen sind in der Regel als Verbindungstyp standardisiert und auf die Art des Datenaustauschs abgestimmt. Als Beispiel seien hier nur USB-Stecker/Buchsen oder Ethernet-Stecker/Buchsen genannt. Die Datenkabel haben eine durch den Verbindungstyp vorgegebene Anzahl von elektrischen Leitern sind dabei vergleichsweise flexibel und in verschiedenen Längen erhältlich, sodass eine Verbindung zwischen zwei Geräten unabhängig von deren Positionierung zueinander leicht möglich ist.

Das gleiche gilt für die Versorgung von elektrischen Geräten mit Strom, sodass ein Komplettkabel zur Versorgung eines Gerätes mit Strom anstatt Signalleitungen als Leiterstücke, Stromleitungen als Leiterstücke haben kann.

Die Herstellung eines Komplettkabels ist vergleichsweise aufwendig. Zunächst muss ein passendes Daten- oder Stromkabel auf die gewünschte Länge abgelängt werden. Das Kabel wird sodann an seinen beiden Enden um eine bestimmte Länge, beispielsweise 5 bis 30 mm entmantelt und gegebenenfalls eine individuelle Isolierung von Einzelleitern abisoliert, so dass die Enden der elektrischen Einzelleiter metallisch frei liegen. Diese werden nun beispielsweise jeweils mit den dafür vorgesehenen Lötfahnen an Einzelverbindern im Stecker verlötet oder gecrimpt oder angeformt. Schließlich wird der Kabelmantel mit einem Klemmelement am oder in einer Ausnehmung im Stecker fixiert und derart eine Zugentlastung realisiert. Außerdem wird häufig noch ein Knickschutz im Bereich des Übergangs zwischen Stecker und Datenkabel angebracht, der zum Beispiel als fertiges Formteil den Kabelmantel im Bereich des Steckers umschließt und teilweise über ein Gehäuse des Steckers übergestülpt wird sowie dort fixiert, beispielsweise verklebt wird.

Ausgehend von diesem Stand der Technik ist es Aufgabe der Erfindung, ein Komplettkabel anzugeben, bei dem die Herstellung vereinfacht ist, sowie ein Verfahren zu dessen vereinfachter Herstellung anzugeben.

Die Aufgabe wird gelöst durch ein Komplettkabel der eingangs genannten Art. Diese ist dadurch gekennzeichnet, dass das Zugentlastungselement als Vergusselement ausgestaltet ist, und dass das Vergusselement an jedem Verbindungselement sowie ein Kabelmantel um die Leiterstücke einstückig aus einem Gussmaterial hergestellt ist, welches elektrisch nichtleitend ist.

Die Grundidee der Erfindung besteht darin, dass ein Komplettkabel entgegen der seit Jahrzehnten geübten Praxis nicht aus einem Daten- oder Stromkabel und Steckern hergestellt wird, sondern aus einem oder mehreren Leiterstücken und Steckern, wobei ein Kabelmantel und das Zugentlastungselement in einem Herstellungsschritt hergestellt werden. Die Leiterstücke können auch individuelle Isolierungen oder Isolierschichten aufweisen. Vorteilhafterweise entfällt das seither notwendige Entmanteln des Datenkabels, gegebenenfalls sogar das Abisolieren der Leiterstücke und das Anbringen eines Zugentlastungselements am Gehäuse des Verbindungselements. Als Leiterstücke sollen nichtisolierte Leiterstücke oder Leiterstücke mit Isolierschicht oder Leiterstücke beziehungsweise Leiterbahnen auf Isolierschicht oder flexiblen Platine bezeichnet werden. Die Leiterstücke sind entsprechend ihrer funktionalen Aufgabe als Datenleiterstück oder als Stromleiterstücke ausgestaltet. Als Beispiel für parallel liegende Leiterstücke mit einer Isolierschicht ist ein Flachleitungsdatenband mit 8 parallel nebeneinander gelegenen Leiterstücken genannt, deren einzelnen Leiter jeweils eine Isolierschicht aufweisen und gleichzeitig mit ihren aneinandergrenzenden Isolierschichten miteinander verbunden sind. Als Beispiel für Leiterstücke auf einer Isolierschicht seien Leiterbahnen genannt, die auf einer flexiblen Platine nebeneinander angeordnet sind. Der Herstellungsprozess für das Komplettkabel ist also vorteilhaft vereinfacht. Für den Herstellungsprozess wird bevorzugt ein Gieß- oder Spritzgussverfahren verwendet.

Eine Variante des Komplettkabels ist auch dadurch gekennzeichnet, dass jedes Leiterstück wenigstens eine Abzweigung aufweist, dass an jeder Abzweigung je ein weiteres Leiterstück angeschlossen ist, dass die weiteren Leiterstücke mit einem weiteren Verbindungselement des bestimmten Verbindungstyps verbunden sind, und dass ein weiteres Vergusselement an dem weiteren Verbindungselement sowie ein weiterer Kabelmantel um die weiteren Leiterstücke einstückig zusammen mit dem Vergusselement an jedem Verbindungselement sowie dem Kabelmantel um die Leiterstücke aus einem Gussmaterial hergestellt sind, welches Gussmaterial elektrisch nichtleitend ist. Auf diese Weise ist besonders einfach eine Verzweigung beispielsweise von einer Eingangsseite des Komplettkabels auf zwei - beispielsweise als sogenanntes Y- Kabel - oder auch mehrere Ausgangsseiten realisierbar. Wobei die Abzweigstelle nicht zwangsläufig zwischen den beiden Verbindungselementen angeordnet sein muss, sondern auch unmittelbar an einer der Verbindungselemente, sodass mit der Verzweigung eine serielle Anordnung der Verbindungselemente und des weiteren Verbindungselements ermöglicht ist. Verbindungselemente und weitere Verbindungselemente sowie die weiteren Bauteile die mit dem Zusatz "weitere" bezeichnet sind, sollen von ihrer Art her dieselben Bauelemente sein, wie ohne den Zusatz.

Eine vorteilhafte Weiterbildung des Komplettkabels sieht vor, dass ein Knickschutzelement an jedem Verbindungselement, welches das Gehäuse teilweise sowie die Leiterstücke umschließt, zusammen mit dem Kabelmantel und den Vergusselementen einstückig hergestellt ist. Auf diese Weise sind wenigstens drei Bauteile einstückig hergestellt beziehungsweise gegossen und die Herstellung des Komplettkabels insgesamt entsprechend weiter vereinfacht.

Zudem ist es erfindungsgemäß vorgesehen, dass dem Knickschutzelement wenigstens ein Zughilfeelement angeformt ist. Je nach Einbausituation kann ein Zughilfeelement, beispielsweise als Lasche am Knickschutzelement oder als zwei Zungen am Knickschutzelement angeordnet sein, sodass die Finger einer Person beispielsweise den Stecker als Verbindungselement am Komplettkabel leicht wieder aus seiner Buchse entfernen können. Beengte Einbausituationen können beispielsweise bei Schienengeräten, im SMGW-Umfeld oder im Bereich eines Basiszählers vorhanden sein.

Eine vorteilhafte Ausgestaltung des Komplettkabels ist erreicht, wenn die Leiterstücke als Litzen, als Draht oder als Leiterbahnen auf einer flexiblen Platine ausgestaltet sind. Weist das Komplettkabel mehr als ein Leiterstück auf, werden entsprechend viele Litzen oder Drähte verwendet. Die Litzen oder Drähte können auch eine elektrische Isolierung oder Isolierschicht aufweisen. Mehrere erforderliche Leitungsbahnen sind dann bevorzugt auf derselben flexiblen Platine angeordnet, die auch mehrere Schichten aufweisen kann, zum Beispiel zwei oder drei Schichten. Zudem ist es auch möglich das mehrere flexible Leiterbahnen übereinander oder nebeneinander in Komplettkabel angeordnet sind. Bei der Ausgestaltung der Leiterstücke als Drähte, erhöhen diese die Stabilität des Komplettkabels insgesamt im Vergleich zur Verwendung von Litzen. Besonders vorteilhaft ist die Verwendung von flexiblen Platinen, auf denen die Leiter als Leiterbahnen ausgestaltet sind. Solche Leiterbahnen sind dann bevorzugt an ihren Enden ringförmig oder gefächert ausgestaltet, sodass sie beispielsweise leicht über einen Pin am Aufnahmeelement gelegt werden können. Die Leiterbahnen der flexiblen Platine werden sodann mit einer besonders schnell sowie parallel arbeitenden Verbindungstechnologie, beispielsweise Ultraschallschweißen, gleichzeitig mit den Pins mehrerer Aufnahmeelemente in den Verbindungselementen verbunden. Als Verbindungstechnologie kommt auch paralleles Crimpen infrage. Mit einem entsprechenden Werkzeug kann anschließend sogar die elektrische Verbindung getestet werden. Der Herstellungsprozess ist entsprechend vereinfacht und schneller als seither. Als Aufnahmeelement seien nur beispielhaft Lötfahnen, Pins, Klemmen oder Steckverbinder genannt, die in Steckern oder Buchsen angeordnet sind.

Eine weitere Ausgestaltungsvariante des Komplettkabel nach einem der vorgenannten Ansprüche, dadurch gekennzeichnet, dass die Verbindungselemente standardisierte Stecker oder Buchsen sind. So sind beispielsweise in Komplettkabeln standardisierte Verbindungstypen wie RJ12-, RJ45-, Ethernet-, LAN- oder USB-Stecker als Verbindungselemente vorgesehen, wobei dem Fachmann eine Vielzahl von weiteren Verbindungselemente, die als Stecker oder Buchsen ausgestaltet sein können, bekannt sind. Genauso ist die Verbindungstechnik für solche Stecker oder Boxen dem Fachmann bekannt, beispielsweise als Rastverbindung, als Steckverbindung, als Schraubverbindung, als formschlüssige oder als kraftschlüssige Verbindung.

Besonders bevorzugt ist das Komplettkabel dann ausgestaltet, wenn die Länge des Datenkabelstücks zwischen 2 cm und 60 cm beträgt. In einem solchen Längenbereich lassen sich Gussverfahren zur Herstellung des Kabelmantels, des Vergusselements und gegebenenfalls weitere Bauelemente des Komplettkabels besonders einfach erstellen. Besonders bevorzugt ist eine Länge des Komplettkabels von wenigstens 5 cm. Grundsätzlich lassen sich zudem wesentlich längere Komplettkabel auf diese Weise herstellen, beispielsweise mit einer Länge von 2m oder 3m. Jedoch ist die besonders effektive Herstellung in einem Längenbereich bis 60 cm möglich.

Zur Erhöhung der mechanischen Stabilität des Komplettkabels, insbesondere im Bereich der Verbindungselemente sieht der Erfindungsgedanke vor, dass ein Stabilisierungselement in das elektrisch nichtleitende Gussmaterial mit eingegossen oder das Gussmaterial als ein zwei-Komponenten Werkstoff ausgestaltet ist. Auch die flexible Platine kann als Stabilisierungselement verwendet werden oder auch entsprechend ausgestaltet sein. Bei manchen Anwendungen ist es wünschenswert, dass ein Komplettkabel weniger flexibel ist als ein Datenkabel, das mit einem "endlos" Herstellungsverfahren vorab mit einem Kabelmantel versehen wurden. Auf die erfindungsgemäße Weise ist jede gewünschte oder erforderliche Stabilität des Datenkabelstücks durch einen individuell gegossenen Kabelmantel erreichbar, beispielsweise auch durch eine Erhöhung der Dicke des Kabelmantels oder durch entsprechende Wahl der Materialien oder eine Kombination davon.

Eine weitere vorteilhafte Ausgestaltung des Komplettkabels ist dadurch gekennzeichnet, dass die beiden Verbindungselemente verschiedene Ausgestaltungen aufweisen. So gibt es insbesondere bei der Übertragung von Daten oft mehrere Standards für Verbindungselemente eines Verbindungstyps. Hier soll als Beispiel für die Übertragung von Daten von einem Gerät auf das andere mit einem USB-Verbindungstyp genannt sein, dass ein USB-Kabel auf der einen Seite ein USB-Stecker als Verbindungselement aufweist und auf der anderen Seite einen Lightning-Stecker angeordnet ist. Das USB-Kabel als Datenkabelstück stellt die für beide Stecker erforderliche Anzahl an elektrischen Leiterstücke für beide Steckerstandards bereit.

Die Aufgabe wird auch gelöst durch ein Verfahren zur Herstellung eines Komplettkabels, das folgende Verfahrensschritte aufweist:
- Verbinden von jeweils einem Ende der Leiterstücke mit einem dafür vorgesehenen Aufnahmeelement an jedem Verbindungselement,
- gleichzeitiges Herstellen eines Kabelmantels um die Leiterstücke sowie der Vergusselemente in den Ausnehmungen der Gehäuse mit einem elektrisch nichtleitendem Gussmaterial in einem Gussverfahrensvorgang.

In einem Verbindungselement sind je nach Verbindungstyp eine entsprechende Anzahl von Aufnahmeelementen, also Kleinverbindungselementen wie beispielsweise Kleinstecker oder Kleinbuchsen angeordnet, sodass jede der Leiterstücke an seinen Enden mit einem Kleinverbindungselement verbindbar ist. Dazu weisen die Kleinverbindungselemente - wie vorstehend schon kurz erwähnt - beispielsweise Klemmen oder Lötfahnen auf, mit denen die Leiterstücke leicht verbindbar sind. In einem einzigen Verfahrensschritt, nämlich einen Gussverfahrensschritt, wird das Komplettkabel nunmehr fertiggestellt, in dem der Kabelmantel und das Vergusselement gleichzeitig gegossen werden. Damit ist sowohl ein Zugentlastungselement, als auch der elektrisch isolierende Kabelmantel gleichzeitig hergestellt worden. Das Herstellungsverfahren benötigt weniger Verfahrensschritte als seither. Entsprechend ist das Herstellungsverfahren insgesamt vereinfacht und beschleunigt worden.

In einer Weiterbildung des erfindungsgemäßen Verfahrens wird ein Knickschutzelement an jedem Verbindungselement, das dessen Gehäuse teilweise sowie die Leiterstücke vollständig umschließt, zusammen mit dem Kabelmantel und den Vergusselementen einstückig hergestellt. Auf diese Weise wird ein weiteres Bauteil mit dem einem Gussverfahrensschritt hergestellt, das ansonsten bzw. seither separat und nachträglich nach der Herstellung eines Datenkabels hergestellt, umgossen oder montiert werden muss.

Erfindungsgemäß kann zusätzlich an das Knickschutzelement wenigstens ein Zughilfeelement angegossen werden. Diese Montage- bzw. Demontagehilfe wird vorteilhafterweise ebenfalls mit dem einzigen Gussverfahrensschritt hergestellt und vereinfacht die Gesamtherstellung weiter.

Auch die Stabilität bzw. die Flexibilität des Komplettkabels ist nach vorgegebenen Werten gestaltbar, indem ein Stabilisierungselement in das elektrisch nichtleitende Material als Gussmaterial mit eingegossen oder ein zwei-Komponenten Werkstoff als das Gussmaterial verwendet wird. Die gewünschte Stabilität oder die gewünschte Flexibilität des Komplettkabels wird also ebenfalls durch den einzigen Gussverfahrensschritt erreicht.

Besonders bevorzugt wird als Gussverfahren ein Spritzguß-, ein Druckguß-, ein Extruder- oder ein Schmelzgußverfahren eingesetzt.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: ein beispielhaftes erstes Komplettkabel, sowie
- Fig. 2: das erste Komplettkabel in einer Schnittansicht,
- Fig. 3: ein beispielhaftes zweites Komplettkabel, sowie
- Fig. 4: ein beispielhaftes drittes Komplettkabel in einer Schnittansicht.

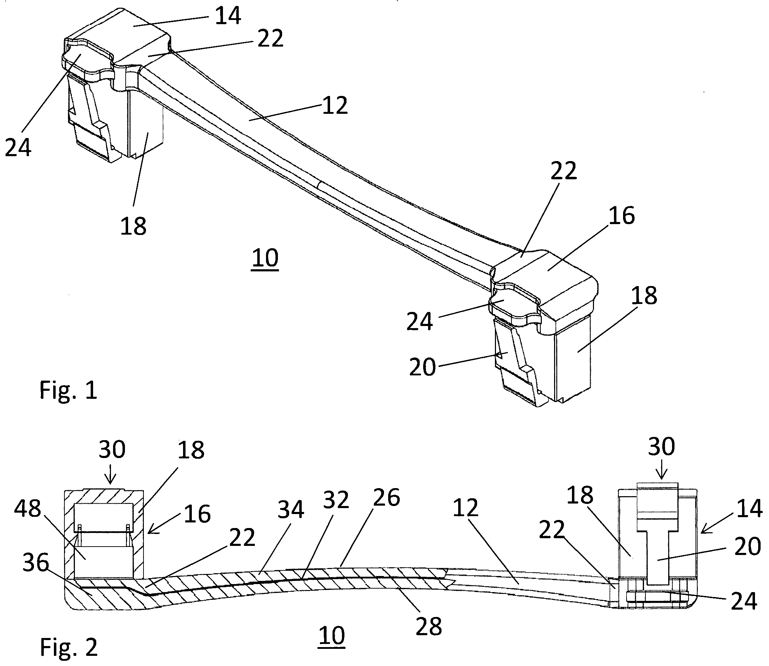

Figur 1 zeigt ein erstes Komplettkabel 10 als Komplettdatenkabel in einer dreidimensionalen Ansicht mit einem ersten Datenkabelstück 12 als Kabelstück, einem ersten 14 und einem zweiten Verbindungselement 16, die im gewählten Ausführungsbeispiel als RJ45 Stecker ausgestaltet sind. Die Erfindung soll jedoch nicht auf ein Komplettdatenkabel beschränkt sein, sondern auch komplett Stromkabel umfassen, die dann entsprechend ein Stromkabelstück aufweisen und auch die anderen Bauteile des Komplettkabels 10 dann eine entsprechende Ausgestaltungen aufweisen, die für die Übertragung von Strom geeignet ist. Jedes Verbindungselement 14, 16 weist ein Gehäuse 18 aus Kunststoff sowie ein Rastelement 20 auf. Bei manchen Ausgestaltungen solcher Verbindungselemente ist um das Gehäuse 18 noch eine metallische Schirmung angeordnet, jedoch nicht im gewählten Ausführungsbeispiel. Mit dem Rastelement 20 ist es ermöglicht eine mechanisch gesicherte Verbindung mit einem Gegenstück zu einem der Verbindungselemente 14, 16 herzustellen, mit dem ein ungewolltes Lösen der Verbindung verhindert ist. Dazu werden häufig Stecker/Buchsen Verbindungen eingesetzt, wobei dann das Rastelement 20 in eine entsprechende Aussparung am Gegenstück für eine sichere Verbindung einrastet.

In Figur 1 ist zudem je ein Knickschutzelement 22 in einem Übergangsbereich zwischen dem Datenkabelstück 12 und den Verbindungselementen 14, 16 gezeigt, welche Knickschutzelemente 22 jeweils ein Zughilfeelement 24 aufweisen, die im Ausführungsbeispiel als Lasche oder Zunge ausgestaltet ist, die dem Zughilfeelement 24 angeformt ist.

Figur 2 zeigt das erste Komplettkabel 10 in einer, bei dem der Schnitt nur teilweise durchgeführt ist und ca. eine Hälfte des Komplettkabels 10 umfasst. Die beiden Verbindungselemente 14, 16 haben die gleiche Einsteckrichtung, das heißt, dass Steckseiten der Verbindungselemente 14, 16 in dieselbe Richtung weisen. Sollen also Steckverbindungen mit je einem Gegenstück zu einem der Verbindungselemente 14, 16 vorgenommen werden, wird das gesamte Komplettkabel 10 in Richtung der Steckseiten der Verbindungselemente 14, 16 verschoben, bis diese in ihre Gegenstücke einrasten und derart mit diesen verbunden sind. Eine oder beide der Verbindungselemente 14, 16 können erfindungsgemäß jedoch auch eine andere Einsteckrichtung aufweisen.

Das Datenkabelstück 12 weist entlang seiner Längserstreckung eine kreisbogenabschnittsförmige Mittellinie auf, wobei in dieser Ansicht ein oberes Ende 26 sowie ein unteres Ende 28 des Datenkabelstücks 12 ebenfalls kreisbogenabschnittsförmig ausgestaltet sind, jedoch ein Radius des oberen Endes 22 größer ist als ein Radius des unteren Endes 24 . Entsprechend ist das Datenkabelstück 12 im Bereich der Knickschutzelemente 22 an den Verbindungselementen 14, 16 dicker ist als im Bereich mittig zwischen den Verbindungselementen 14, 16 am Datenkabelstück 12. Diese Ausgestaltung des Datenkabelstücks 12 sorgt für eine besonders stabile Verbindung zwischen den Verbindungselementen 14, 16 und dem Datenkabelstück 12 und sorgt dafür, dass das Datenkabelstück 12 eine Krümmung in Form eines Ringbogen- oder Kreisbogenabschnitts aufweist, deren Scheitelpunkt in Richtung von Steckseiten 30 der Verbindungselemente 14, 16 liegt. Zudem liegt die gedachte kreisbogenförmige Mittellinie des Datenkabelstücks 12 ebenfalls in der durch die Geraden definierte Ebene, also wiederum der Bildebene. In der normalen Einbausituation für ein solches erstes Komplettkabel 10 zwischen zwei Geräten würde der besagte Scheitelpunkt der Krümmung bevorzugt in Richtung der Geräte weisen. Die Krümmung kann jedoch auch von den besagten Geräten wegweisen.

Das erstes Komplettkabel 10 ist in der Figur teilweise als Längsschnittansicht ausgeführt, nämlich in einem in der Figur linken Teil mit dem zweiten Verbindungselement 16. In dem geschnittenen Teil der Ansicht sind elektrische Leiter erkennbar, die im gewählten Beispiel als Leiterbahnen auf einer flexiblen Platine 32 ausgeführt sind. Die flexible Platine ist in dieser Ansicht als Seitenansicht gezeigt, so dass die einzelnen elektrischen Leiterstücke in dieser Figur nicht separat erkennbar sind. Besonders vorteilhaft bei der gezeigten flexiblen Platine ist es, dass diese im Bereich der Verbindungselemente 14, 16 so ausgestaltet ist, dass ein elektrischer Anschluss an die Verbindungselemente 14, 16 besonders einfach möglich ist. Zum andern ist die flexible Platine 32 in dieser Ansicht genau mittig im Datenkabelstück 12 angeordnet und ist demgemäß ebenfalls kreisbogenförmig in diesem Bereich ausgestaltet. Durch die mittige Anordnung kann gesagt werden, dass im Bereich des Datenkabelstücks 12 die flexible Platine 32 der Lage der Mittellinie im Leiterstück entspricht. Ein besonderer Vorteil dieser Ausgestaltungsvariante des ersten Komplettkabels 10 ist ein Toleranzausgleich zwischen den beiden Verbindungselementen 14, 16, die zwar einen funktionsbedingten festen Abstand zueinander aufweisen, jedoch der Abstand durch die kreisbogenabschnittsförmige Gestalt des Datenkabelstücks 12, etwas verlängerbar ist, nämlich bis der kreisbogenabschnittsförmig Abschnitt in einen geraden Abschnitt verformt ist. Auf diese Weise werden kleine Unterschiede zwischen Soll- und Ist-Abstand zwischen den Geräten bei der Montage ausgleichbar.

Aus dem Schnittbild ist ebenfalls gut erkennbar, dass ein Kabelmantel 34, ein Vergusselement 36, das Knickschutzelement 22 sowie das Zughilfeelement 24 einstückig hergestellt sind. Im gewählten Beispiel erfolgte die Herstellung des vorstehenden einstückigen Bauteils mit einem elektrisch nicht-leitenden Gussmaterial durch ein Niederdruckgussverfahren.

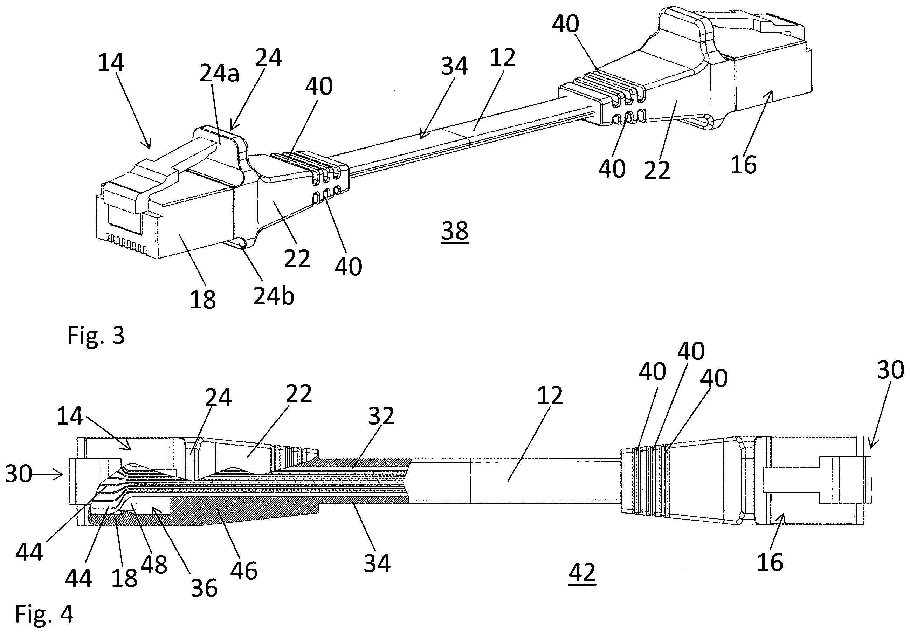

Die Fig. 3 zeigt ein beispielhaftes zweites Komplettkabel 38, bei dem die mit den ersten Komplettkabel 10 vergleichbaren Bauteile mit denselben Bezugszeichen versehen sein sollen. Als Verbindungselemente 14, 16 sind RJ45 Stecker gezeigt, deren Steckseiten in entgegengesetzte Richtungen weisen und derart eine Anordnung zeigen, die typisch ist für ein Komplettkabel als Verlängerungskabel bzw. einfaches Verbindungskabel. Das beispielhafte zweite Komplettkabel 38 hat eine Länge von 12 cm. Beim zweiten Komplettkabel 38 ist das Knickschutzelement 22 länger ausgestaltet als beim ersten Komplettkabel 10 und hat eine Länge, die ungefähr der Länge eines Verbindungselement 14, 16 entspricht. Zudem verjüngt sich das Knickschutzelement 22 ausgehend vom Verbindungselement 14, 16 in Richtung des Kabelmantels 34 und hat im Bereich seines vom Stecker wegweisenden Endes mehrere Nuten 40, welche das Knickschutzelement besonders biegsam und flexibel machen.

Als Datenkabelstück 12 ist in diesem Ausgestaltungsbeispiel ein Flachleitungsdatenband gewählt, dass mit den Kabelmantel 34 umgossen ist. Das Zughilfeelement 24 weist beim zweiten Komplettkabel 38 zwei Teile auf, nämlich ein erstes Teil 24a, welches zugleich einen mechanischen Schutz für das Rastelement 20 ausbildet, sowie ein zweites Teil 24b an einer dem ersten Teil 24a abgewandten Seite des Verbindungselement 14, 16, so dass es einer Person besonders leicht fällt das Zughilfeelement 24 mit zwei Fingern zu greifen bzw. das Verbindungselement 14, 16 zu ziehen, nämlich mit einem Finger an jedem der Teile 24a, 24b. Auch beim zweiten Komplettkabel 38 sind der Kabelmantel 34, das Zughilfeelement 24, aufweisend die Teile 24a, 24b, sowie das Knickschutzelement 22 einstückig hergestellt worden.

Die Fig. 4 zeigt ein beispielhaftes drittes Komplettkabel 42 in einer teilweisen Schnittansicht, bei dem ebenfalls die mit den ersten Komplettkabel 10 vergleichbaren Bauteile mit denselben Bezugszeichen versehen sein sollen. Als Verbindungselemente 14, 16 sind wiederum RJ45 Stecker gezeigt, deren Steckseiten in entgegengesetzte Richtungen weisen und derart eine Anordnung zeigen, wie sie typisch ist für ein Komplettkabel als Verlängerungskabel bzw. einfaches Verbindungskabel. Das beispielhafte dritte Komplettkabel 42 hat eine Länge von 15 cm. Typische Längen für ein Komplettkabel sind jedoch Mengen von 8 cm bis 1,50 m. In diesem Ausführungsbeispiel des Erfindungsgegenstandes weist das Datenkabelstück 12 - ähnlich zum Ausführungsbeispiel in der Figur 2 - eine flexible Platine 32 auf, auf der insgesamt 8 Leiterbahnen 46 angeordnet sind. Ein besonderer Vorteil der flexiblen Platine 32 ist deren Beweglichkeit, sodass das dritte Komplettkabel 42 vergleichbar flexibel ist, wie die seither genutzten Datenkabel, sofern dies auslegungsbedingt gewünscht ist. Zudem kann die flexible Platine 32 mit ihren Leiterbahnen 46 besonders einfach entsprechend konstruktiven Erfordernissen hergestellt werden. So liegen beispielsweise beim dritten Komplettkabel 42 die Leiterbahnen 44 im Bereich des Datenkabelstück 12 vergleichsweise eng beieinander und erweitern ihren Abstand zueinander im Bereich des Gehäuses 18 bis ein Abstand zwischen den Leiterbahnen 44 erreicht ist, der dem Abstand zwischen den Aufnahmeelementen im Verbindungselement 14, 16 entspricht. Eine elektrische Verbindung lässt sich so beispielsweise mit einer Verbindungstechnologie realisieren, die üblicherweise für eine Bestückung von Platinen verwendet wird und die gleichzeitig alle Aufnahmeelemente mit den entsprechenden Leiterbahnen 44 verbindet, zum Beispiel mittels eines Ultraschalllöt- oder eines Ultraschallschweißverfahrens. Auch dieser Herstellungsschritt für das dritte Komplettkabel 42 ist vorteilhaft vereinfacht und beschleunigt die Herstellung insgesamt weiter.

Zudem ist in der Figur 4 anhand der Schraffur gut erkennbar, dass beim dritten Komplettkabel 42 der Kabelmantel 34, das Zughilfeelement 24 sowie das Knickschutzelement 22 einstückig mit einem einheitlichen elektrisch nicht-leitenden Gussmaterial 46 hergestellt worden ist. Das Gussmaterial 46 bindet einerseits unmittelbar an das Gehäuse 18 an, andererseits gelangt auch Gussmaterial 46 durch den Giessvorgang in eine Ausnehmung 48 des Gehäuses 18, so dass sich das Gussmaterial 46 mit dem Gehäuse 18 verbindet und derart das Vergusselement 36 als Zugentlastungselement ausgebildet ist. Das Vergusselement 36 ist in der Figur jedoch aufgrund der Lage des Freischnittes nicht erkennbar. Für eine besonders gute Verbindung zwischen dem Gussmaterial 46 und dem Gehäuse 18 kann dieses beispielsweise Nuten oder Löcher auf den zur Ausnehmung 48 weisenden Seiten haben. Die Einleitung von Zugkräften vom Vergusselement 36 für eine Zugentlastung in das Gehäuse 18 ist hierdurch vorteilhaft verbessert.

### Bezugszeichenliste

- 10: erstes Komplettkabel
- 12: Datenkabelstück
- 14: erstes Verbindungselement
- 16: zweites Verbindungselement
- 18: Gehäuse
- 20: Rastelement
- 22: Knickschutzelement
- 24: Zughilfeelement
- 26: oberes Ende
- 28: unteres Ende
- 30: Steckseite
- 32: flexible Platine
- 34: Kabelmantel
- 36: Vergusselement
- 38: zweites Komplettkabel
- 40: Nuten
- 42: drittes Komplettkabel
- 44: Leiterbahnen
- 46: Gussmaterial
- 48: Ausnehmung

## Patentansprüche

1. Komplettkabel (10, 38, 42) mit einem Kabelstück (12) vorgegebener Länge, wobei das Kabelstück (12) an jedem seiner beiden Enden mit einem Verbindungselement (14, 16) eines bestimmten Verbindungstyps verbunden ist, wobei das Kabelstück (12) eine durch den Verbindungstyp der Verbindungselemente (14, 16) vorgegebene Anzahl von Leiterstücken aufweist, durch die eine entsprechende Anzahl von elektrischen Verbindungen zwischen den beiden Verbindungselementen (14, 16) hergestellt ist, wobei die Verbindungselemente (14, 16) ein Gehäuse (18) aus elektrischem Isoliermaterial aufweisen, wobei das Gehäuse (18) eine Ausnehmung (48) aufweist, die für eine Aufnahme eines Zugentlastungselements vorgesehen ist,
**dadurch gekennzeichnet, dass**
das Zugentlastungselement als Vergusselement (36) ausgestaltet ist, und dass das Vergusselement (36) an jedem Verbindungselement (14, 16) sowie ein Kabelmantel (34) um die Leiterstücke einstückig aus einem Gussmaterial (46) hergestellt ist, welches Gussmaterial (46) elektrisch nichtleitend ist.

2. Komplettkabel (10, 38, 42) nach Anspruch 1, **dadurch gekennzeichnet, dass** jedes Leiterstück wenigstens eine Abzweigung aufweist, dass an jeder Abzweigung je ein weiteres Leiterstück angeschlossen ist, dass die weiteren Leiterstücke mit einem weiteren Verbindungselement des bestimmten Verbindungstyps verbunden sind, und dass ein weiteres Vergusselement an dem weiteren Verbindungselement sowie ein weiterer Kabelmantel um die weiteren Leiterstücke und die Abzweigungen einstückig zusammen mit dem Vergusselement (36) an jedem Verbindungselement (14, 16) sowie dem Kabelmantel (34) um die Leiterstücke aus einem Gussmaterial (46) hergestellt ist, welches Gussmaterial (46) elektrisch nichtleitend ist.

3. Komplettkabel (10, 38, 42) nach Anspruch 1 oder 2, **dadurch gekennzeichnet, dass** je ein Knickschutzelement (22) an jedem Verbindungselement (14, 16) oder weiterem Verbindungselement, welches das Gehäuse (18) teilweise sowie die Leiterstücke umschließt, zusammen mit dem Kabelmantel (34) und den Vergusselementen (36) einstückig hergestellt ist.

4. Komplettkabel (10, 38, 42) nach Anspruch 3, **dadurch gekennzeichnet, dass** dem Knickschutzelement (22) wenigstens ein Zughilfeelement (24) angeformt ist.

5. Komplettkabel (10, 38, 42) nach einem der vorgenannten Ansprüche, **dadurch gekennzeichnet, dass** die Leiterstücke als Litzen, als Drähte oder als Leiterbahnen auf einer flexiblen Platine ausgestaltet sind.

6. Komplettkabel (10, 38, 42) nach einem der vorgenannten Ansprüche, **dadurch gekennzeichnet, dass** die Verbindungselemente (14, 16) oder das weitere Verbindungselement standardisierte Stecker oder Buchsen sind.

7. Komplettkabel (10, 38, 42) nach einem der vorgenannten Ansprüche, **dadurch gekennzeichnet, dass** die Länge des Kabelstückes zwischen 2 cm und 60 cm beträgt.

8. Komplettkabel (10, 38, 42) nach einem der vorgenannten Ansprüche, **dadurch gekennzeichnet, dass** ein Stabilisierungselement in das elektrisch nichtleitende Material (34) mit eingegossen oder das elektrisch nichtleitende Material (34) als ein zwei-Komponenten Werkstoff ausgestaltet ist.

9. Komplettkabel (10, 38, 42) nach einem der vorgenannten Ansprüche, **dadurch gekennzeichnet, dass** die beiden Verbindungselemente (14, 16) verschiedene Ausgestaltungen aufweisen.

10. Verfahren zur Herstellung eines Komplettkabels (10, 38, 42) nach einem der vorgenannten Ansprüche, das folgende Verfahrensschritte aufweist:
- Verbinden von jeweils einem Ende der Leiterstücke mit einem dafür vorgesehenen Aufnahmeelement an jedem Verbindungselement (14, 16),
- gleichzeitiges Herstellen eines Kabelmantels (34) um die Leiterstücke sowie der Vergusselemente (36) in den Ausnehmungen (48) der Gehäuse (18) mit einem elektrisch nichtleitendem Gussmaterial (46) in einem Gussverfahrensvorgang.

11. Verfahren nach Anspruch 10, **dadurch gekennzeichnet, dass** ein weiteres Vergusselement an einem weiteren Verbindungselement sowie der weitere Kabelmantel um die weiteren Leiterstücke und die Abzweigungen einstückig zusammen mit dem Vergusselement (36) an jedem Verbindungselement (14, 16) sowie dem Kabelmantel (34) um die Leiterstücke aus einem Gussmaterial (46) hergestellt wird.

12. Verfahren nach Anspruch 10 oder 11, **dadurch gekennzeichnet, dass** das Knickschutzelement (22) an jedem Verbindungselement (14, 16) oder weiteren Verbindungselement, welches das jeweilige Gehäuse (18) teilweise sowie die Leiterstücke umschließt, zusammen mit dem Kabelmantel (34) und den Vergusselementen (36) einstückig hergestellt wird.

13. Verfahren nach einem der vorgenannten Ansprüche 10 bis 12, **dadurch gekennzeichnet, dass** ein Knickschutzelement (22) mit einem angegossenen Zughilfeelement (24) hergestellt wird.

14. Verfahren nach einem der vorgenannten Ansprüche 10 bis 13, **dadurch gekennzeichnet, dass** ein Stabilisierungselement in den Kabelmantel (34) mit eingegossen oder ein zwei-Komponenten Werkstoff als das Gussmaterial (46) verwendet wird.

15. Verfahren nach einem der vorgenannten Ansprüche 10 bis 14, **dadurch gekennzeichnet, dass** als Gussverfahren ein Spritzguß-, ein Druckguß-, ein Extruder-, ein Schmelz- oder ein Gußverfahren eingesetzt wird.
